# EUROPÄISCHE PATENTSCHRIFT

(11) **EP 1 801 727 B1**
(45) Veröffentlichungstag und Bekanntmachung des Hinweises auf die Patenterteilung: **02.05.2012**
(21) Anmeldenummer: 06124189.9
(22) Anmeldetag: 16.11.2006
(51) Int. Cl.: G06K 7/00

(54) **Schreib-/Lesestation eines RFID-Systems sowie Verfahren zur Kommunikation zwischen einer Schreib-/Lesestation und einem Transponder**
Read/write station of an RFID system as well as method for communication between a read/write station and a transponder
Station d'écriture/lecture d'un système RFID ainsi que procédé pour la communication entre une station d'écriture/lecture et un transpondeur

(30) Priorität: 20.12.2005 DE 102005061284
(43) Veröffentlichungstag der Anmeldung: 27.06.2007
(73) Patentinhaber: Feig Electronic GmbH, 35781 Weilburg-Waldhausen (DE)
(72) Erfinder: Reichwein, Elmar, 65599, Dornburg (DE)
(74) Vertreter: Knefel, Cordula

(56) Entgegenhaltungen:
- WO-A-2005/052847
- FR-A- 2 861 932

## Beschreibung

Die Erfindung betrifft eine Schreib-/Lesestation eines RFID-Systems zur Kommunikation mit passiven RFID-Transpondern sowie ein Verfahren zur Kommunikation zwischen einer Schreib-/Lesestation und einem Transponder.

Eine Schreib-/Lesestation eines RFID-Systems besteht gemäß dem Stand der Technik in der Regel aus den Einheiten Sendevorrichtung, Antenne und Empfangsvorrichtung.

Die Sendevorrichtung hat die Aufgabe, die elektrische Leistung zur Verfügung zu stellen, die über die Antenne, die eine kombinierte Sende-/Empfangsantenne ist, abgegeben wird. Das von der Sendevorrichtung erzeugte elektrische hochfrequente Signal (HF-Signal) ist dabei eine Wechselspannung oder ein Wechselstrom mit einer Frequenz von beispielsweise 125 kHz oder 13,56 MHz oder einer anderen Frequenz. Das abgegebene HF-Signal hat gleichzeitig zwei Funktionen. Zum einen dient es dazu, den oder die passiven Transponder innerhalb des Antennenfeldes berührungslos mit elektrischer Energie zu versorgen, und zum anderen dient es als Trägerfrequenz für die bidirektionale Datenübertragung zwischen Transponder und Schreib-/Lesestation. Bei den meisten bekannten RFID-Systemen wird zur Datenübertragung von der Schreib-/Lesestation zu dem oder den Transpondern die Trägerfrequenz mit den zu sendenden Daten in ihrer Amplitude moduliert.

Die Datenübertragung vom Transponder zur Schreib-/Lesestation (Rückantwort) erfolgt häufig durch ein Verfahren, welches unter dem Oberbegriff der Lastmodulation zusammengefasst werden kann. Damit die Schreib-/Lesestation eines RFID-Systems die Rückantwort eines weit entfernten Transponders sicher empfangen kann, muss der Empfänger der Schreib-/Lesestation eine sehr hohe Empfindlichkeit aufweisen und in der Lage sein, noch sehr schwache Signale als Rückantwort eines Transponders zu erkennen.

Bei anderen üblichen Funksystemen wird auf eine Trägerfrequenz die zu übertragende Information aufmoduliert. Die durch die Information modulierte Trägerfrequenz wird von einem Sender ausgesendet. Ein Empfänger, der meist weit von dem Sender entfernt ist, empfängt die mit der Information modulierte Trägerfrequenz und demoduliert daraus wieder die Information. Entscheidend ist hierbei, dass der Empfänger eine Empfindlichkeit aufweist, die es ermöglicht, die modulierte Information aus dem empfangenen Signal zu demodulieren. Die Signalstärke der empfangenen Trägerfrequenz ist dabei meist ähnlich groß wie die Signalstärke der aufmodulierten Informationen.

Das Sender-/Empfänger-System einer Schreib-/Lesestation eines RFID-Systems weist gegenüber anderen Funksystemen einen deutlichen Unterschied auf, da die Sendevorrichtung und die Empfangsvorrichtung eine gerätetechnische Einheit bilden und die Sendevorrichtung eine hohe Energie aussenden muss, um die passiven Transponder in einem entsprechend großen Abstand von der Schreib-/Lesestation mit elektrischer Energie versorgen zu können, die Transponder bei ihrer Rückantwort aber nur ein verhältnismäßig schwaches Signal auf die von der Schreib-/Lesestation ausgesendete Trägerfrequenz aufmodulieren können. Um dieses schwache Rückantwortsignal empfangen zu können, benötigt die Empfangsvorrichtung der Schreib-/Lesestation eine sehr hohe Empfindlichkeit. Gleichzeitig empfängt die Empfangsvorrichtung jedoch auch das verhältnismäßig starke Sendesignal der Schreib-/Lesestation, welches mit hoher Energie in den Empfänger einwirkt.

Dadurch, dass die Schreib-/Lesestation ihr eigenes Sendesignal mit hoher Signalstärke empfängt, kann das schaltungs-, bauteil- und temperaturbedingte Rauschen des Senders eine so hohe Amplitude aufweisen, dass das schwache Rückantwortsignal eines Transponders vom Rauschen der Sendevorrichtung überdeckt wird, so dass die Empfangsvorrichtung der Schreib-/Lesestation keine Transponder-Rückantwortdaten mehr demodulieren kann.

Die Empfangsvorrichtung ist häufig als ein Demodulator aufgebaut, der unter dem Oberbegriff quadratischer Detektor (auch bekannt als quadratischer Demodulator) bekannt ist und der beispielsweise als Diodendemodulator ausgeführt werden kann. Der Einsatz eines Diodendemodulators hat den Vorteil, dass dieser aus wenigen und preiswerten Bauteilen aufgebaut ist. Eine Voraussetzung zur Funktion eines Diodendemodulators ist, dass das eingespeiste Signal noch einen gewissen Anteil der Amplitude der Trägerfrequenz enthält.

Um zu verhindern, dass das verrauschte Sendesignal der Sendevorrichtung in die Empfangsvorrichtung einwirkt, kann zwischen Sendevorrichtung, Antenne und Empfangsvorrichtung eine mehrtorige Signalverteilvorrichtung mit mindestens drei Toren eingesetzt werden, mit dem das Sendesignal relativ ungehindert an die Antenne durchgeleitet wird, aber nur zu einem geringen Teil an die Empfangsvorrichtung gelangt, während das Empfangssignal von der Antenne relativ ungehindert an die Empfangsvorrichtung gelangen kann. Eine solche Signalverteilvorrichtung kann beispielsweise als ein Richtkoppler oder als ein Zirkulator ausgebildet sein. Der Einsatz eines Richtkopplers in einer Schreib-/Lesestation eines RFID-Systems gehört zum Stand der Technik und wurde bereits in der 1998 erschienen Auflage des RFID-Handbuch von Klaus Finkenzeller (ISBN 3-446-19376-6) im Kapitel 3.2.3.2 Datenübertragung Transponder > Leser und später in der Schrift WO 2005/052847 beschrieben.

Der Einsatz einer Signalverteilvorrichtung hat jedoch den großen Nachteil, dass unter bestimmten Vorraussetzungen der Anteil der Amplitude der Trägerfrequenz im Empfangssignal so gering sein kann, dass die Funktion des quadratischen Detektors nicht mehr gewährleistet ist. Dieser Fall kann beispielsweise dann eintreten, wenn sich der Anteil des Sendesignals, welcher von der Signalverteilvorrichtung zur Empfangsvorrichtung gelangt, gegenüber dem Anteil der Trägerfrequenz, der von der Antenne über die Signalverteilungsvorrichtung zur Empfangsvorrichtung geleitet wird, eine Phasenverschiebung im Bereich von 180° aufweist und beide Teile eine ähnlich hohe Amplitude aufweisen und somit ein Summensignal entsteht, welches nahezu keinen Anteil der Trägerfrequenz mehr enthält.

Bei anderen Schreib-/Lesestationen nach dem Stand der Technik wird ein Bandpassfilter zwischen Antenne und Empfangsvorrichtung der Schreib-/Lesestation angeordnet. Dieses Bandpassfilter kann auch in Verbindung mit einer Signalverteilvorrichtung eingesetzt werden, wobei das Bandpassfilter dann beispielsweise zwischen Signalverteilvorrichtung und Empfangsvorrichtung angeordnet ist. Das Bandpassfilter ist vorteilhaft als sogenanntes Seitenbandfilter ausgelegt und so dimensioniert, dass ihn lediglich der Frequenzbereich eines der beiden Seitenbänder passieren kann, auf dem die Datenübertragung vom Transponder zur Schreib-/ Lesestation erfolgt. Je nach Filtercharakteristik des Seitenbandfilters wird somit ein großer bis überwiegender Anteil der Amplitude der Trägerfrequenz aus dem Empfangssignal herausgefiltert, was die Einsatzmöglichkeit eines einfachen und preiswerten Diodendemodulators in der Empfangsvorrichtung der Schreib-/Lesestation stark einschränken würde.

Zum Stand der Technik (US 2005/0084003 A1) gehört ein RFID-System, bei dem ein Quadraturempfänger verwendet wird. Gemäß diesem Stand der Technik wird ein Trägerhilfssignal dazu verwendet, das Trägersignal aus dem Empfangssignal zu eliminieren, da der gemäß diesem Stand der Technik verwendete Empfänger nur dann zuverlässig arbeitet, wenn ihm kein Trägersignal zugeführt wird.

Davon ausgehend liegt der Erfindung das technische Problem zugrunde, eine Schreib-/Lesestation für ein RFID-System anzugeben, die den Betrieb eines quadratischen Detektors, der als Diodendemodulator ausgeführt sein kann, sich aber nicht auf diese Ausführungsform beschränkt, auch dann sicher gewährleistet, wenn das Empfangssignal einen unzureichenden Anteil der Amplitude der Trägerfrequenz aufweist. Darüber hinaus liegt der Erfindung das technische Problem zugrunde, ein Verfahren zu Kommunikation zwischen einer Schreib-/Lesestation und einem Transponder anzugeben, bei dem die genannten Nachteile nicht auftreten.

Gelöst wird dieses Problem durch eine Vorrichtung mit den Merkmalen gemäß Anspruch 1 sowie durch ein Verfahren mit den Merkmalen gemäß Anspruch 11.

Die erfindungsgemäße Schreib-/Lesestation eines RFID-Systems zur Kommunikation mit passiven RFID-Transpondern, die
- eine Antenne, die gleichzeitig als Sende- und Empfangsantenne ausgebildet ist,
- eine Sendevorrichtung,
- eine Empfangsvorrichtung, die einen quadratischen Detektor enthält, wobei die Empfangsvorrichtung als eine wenigstens ein Empfangssignal mit einer Trägerfrequenz mit einer Amplitude empfangende Empfangsvorrichtung ausgebildet ist,
- eine zwischen der Antenne und der Empfangsvorrichtung angeordnete Signalverteilvorrichtung und/oder eine Filtervorrichtung und
- eine Steuer- und Auswertevorrichtung
aufweist, zeichnet sich dadurch aus, dass die Schreib-/ Lesestation als eine dem Empfangssignal wenigstens ein Trägerhilfssignal zur Vermeidung einer Auslöschung oder einer starken Reduzierung einer Amplitude einer Trägerfrequenz hinzufügende Schreib-/Lesestation ausgebildet ist.

Die erfindungsgemäße Schreib-/Lesestation weist hierdurch den Vorteil auf, dass der Betrieb eines quadratischen Detektors auf jeden Fall gewährleistet ist, da das Empfangssignal einen ausreichenden Anteil der Amplitude der Trägerfrequenz aufweist.

Die erfindungsgemäße Schreib-/Lesestation ist vorteilhaft derart ausgebildet, dass die fehlende Trägerfrequenz als Trägerhilfssignal ständig oder im Bedarfsfalle zu dem Empfangssignal hinzufügt wird. Das nur bedarfsweise Hinzufügen des Trägerhilfssignals ist von Vorteil, da die ständige Hinzufügung des Trägerhilfssignals zu einer Auslöschung oder starken Reduzierung der Amplitude der Trägerfrequenz führen kann, wenn die Phasenlage der im Empfangssignal enthaltenen Trägerfrequenz in einem Bereich von 180° gegenüber der Phasenlage des Trägerhilfssignals verschoben ist und die Amplituden beider Signale einen ähnlich hohen Wert aufweisen.

Gemäß einer vorteilhaften Ausführungsform der Erfindung ist eine Messvorrichtung zur Bestimmung der Amplitude des im Empfangssignal enthaltenen Trägersignals vorgesehen. Die Messvorrichtung hat die Aufgabe, der Steuer- und Auswertevorrichtung einen Messwert zur Verfügung zu stellen, aus dem die Amplitude der im Empfangssignal enthaltenen Trägerfrequenz abgeleitet werden kann.

Vorteilhaft wird der Messvorrichtung das Empfangssignal direkt zugeführt. Dieses hat den Vorteil, dass die Messvorrichtung direkt aus dem Empfangssignal ermitteln kann, ob darin noch eine ausreichende Amplitude des Trägersignals enthalten ist.

Gemäß einer vorteilhaften Ausführungsform der Erfindung wird der Messvorrichtung das Empfangssignal nach Hinzufügen des Trägerhilfssignales zugeführt. Der Vorteil hierbei liegt darin, dass der Einfluss, den das Hinzufügen des Trägerhilfssignales auf das Empfangssignal hat, von der Messvorrichtung erkannt wird und somit ein gezieltes und dosiertes Hinzufügen des Trägerhilfssignales einfach möglich wird.

Gemäß einer weiteren vorteilhaften Ausführungsform der Erfindung wird der Messvorrichtung das demodulierte Empfangssignal zugeführt. Diese Ausführungsform ist vorteilhaft, da die Messvorrichtung hierzu sehr einfach und preiswert aufgebaut werden kann, da sie nur noch eine, im Demodulator-Ausgangssignales enthaltene Gleichspannung messen muss, die abhängig von der Amplitude des Trägersignales im Empfangssignal ist.

Gemäß einer besonders bevorzugten Ausführungsform der Erfindung ist die Hinzufügung des Trägerhilfssignales durch ein Steuersignal steuerbar, wobei das Steuersignal über eine einzelne Steuerleitung oder einen Verbund mehrerer Steuerleitungen übertragen werden kann und das Steuersignal ein digitales oder analoges Steuersignal sein kann. Dies hat den Vorteil, dass das Hinzufügen des Trägerhilfssignales damit aktivierbar oder deaktivierbar ist und optional die Amplitude und/oder Phasenlage des Trägerhilfssignales steuerbar ist.

Vorzugsweise wird das Trägerhilfssignal von einem Frequenzgenerator, der als ein gleichzeitig das Trägersignal für die Datenübertragung generierender Frequenzgenerator ausgebildet wird, erzeugt. Der Vorteil dieser Ausführungsform liegt darin, dass er preiswert ist, da kein zusätzlicher Frequenzgenerator notwendig wird.

Da die ständige Hinzufügung des Trägerhilfssignals zu einer Auslöschung oder starken Reduzierung der Amplitude der Trägerfrequenz führen kann, wenn die Phasenlage der im Empfangssignal enthaltenen Trägerfrequenz in einem Bereich von 180° gegenüber der Phasenlage des Trägerhilfssignals verschoben ist und die Amplituden beider Signale einen ähnlich hohen Wert aufweisen, ist gemäß einer vorteilhaften Ausführungsform der Erfindung in der Schreib-/Lesestation ein Phasenschieber vorgesehen. Das Trägerhilfssignal wird dann von dem Phasenschieber in seiner Phasenlage verschoben, um die Auslöschung oder die starke Reduzierung der Amplitude der Trägerfrequenz zu vermeiden.

Vorteilhaft ist für die Erzeugung des Trägerhilfssignales ein separater Frequenzgenerator vorgesehen. Der Vorteil dieser Ausführungsform liegt darin, dass die Phasenlage und Amplitude des Trägerhilfssignales unabhängig vom Frequenzgenerator für die Erzeugung des Sendesignales generierbar ist.

Das erfindungsgemäße Verfahren zur Kommunikation zwischen einer Schreib-/Lesestation und einem Transponder, wobei eine Empfangsvorrichtung der Schreib-/Lesestation ein Empfangssignal des Transponders empfängt, zeichnet sich dadurch aus, dass dem Empfangssignal wenigstens ein Trägerhilfssignal hinzugefügt wird. Durch dieses Verfahren ist ein Betrieb eines quadratischen Detektors auf jeden Fall gewährleistet, da das Empfangssignal einen ausreichenden Anteil der Amplitude der Trägerfrequenz aufweist.

Dadurch, dass das Trägerhilfssignal dem Empfangssignal vorzugsweise lediglich im Bedarfsfalle hinzugefügt wird, wird vermieden, dass durch ein ständiges Hinzufügen des Trägerhilfssignals eine Auslöschung oder starke Reduzierung der Amplitude der Trägerfrequenz auftritt, wenn die Phasenlage der im Empfangssignal enthaltenen Trägerfrequenz in einem Bereich von 180° gegenüber der Phasenlage des Trägerhilfssignals verschoben ist und die Amplituden beider Signale einen ähnlich hohen Wert aufweisen.

Gemäß einer vorteilhaften Weiterbildung der Erfindung ist die Hinzufügung des Trägerhilfssignales durch ein Steuersignal steuerbar, über welches der Zeitpunkt und optional auch die Amplitude und/oder Phasenlage des Trägerhilfssignales gesteuert werden kann.

Vorteilhaft wird mittels einer Messvorrichtung eine Bestimmung der Amplitude des im Empfangssignal enthaltenen Trägersignals durchgeführt. Die Messvorrichtung liefert der Steuer- und Auswertevorrichtung einen Messwert, aus dem die Amplitude der im Empfangssignal enthaltenen Trägerfrequenz abgeleitet werden kann.

Gemäß einer besonders bevorzugten Ausführungsform der Erfindung wird das Trägerhilfssignal in seiner Phasenlage verschoben. Hierdurch wird die Auslöschung oder starke Reduzierung der Amplitude der Trägerfrequenz vermieden.

Weitere Merkmale und Vorteile der Erfindung ergeben sich anhand der zugehörigen Zeichnung, in der mehrere Ausführungsbeispiele einer erfindungsgemäßen Schreib-/Lesestation nur beispielhaft dargestellt sind. In der Zeichnung zeigen:
- Fig. 1: ein Blockschaltbild einer ersten Ausführungsform der erfindungsgemäßen Schreib-/Lesestation mit einer Signalverteilvorrichtung;
- Fig. 2: ein Blockschaltbild einer Ausführungsform der erfindungsgemäßen Schreib-/Lesestation mit einem Seitenbandfilter;
- Fig. 3: das Schaltbild einer Ausführungsform eines Diodendetektors;
- Fig. 4: ein Blockschaltbild einer verbesserten Ausführungsform der erfindungsgemäßen Schreib-/Lesestation;
- Fig. 5: ein Blockschaltbild einer weiteren verbesserten Ausführungsform der erfindungsgemäßen Schreib-/Lesestation.

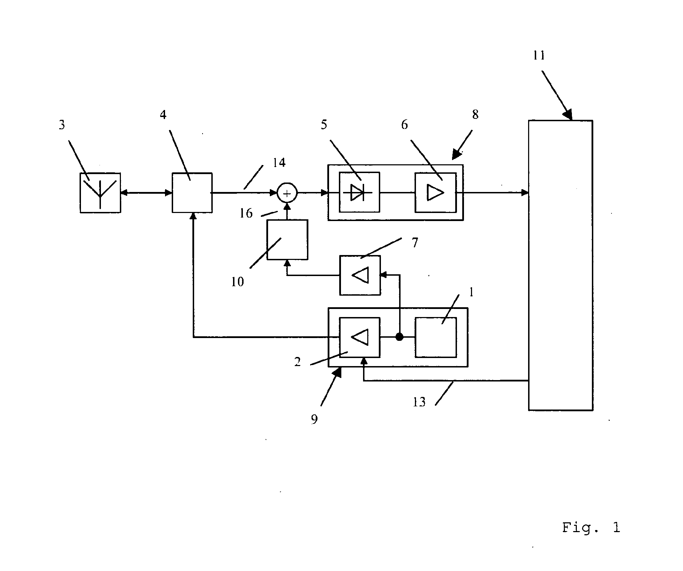

Anhand der in Fig. 1 beispielhaft dargestellten ersten Ausführungsform der erfindungsgemäßen Schreib-/Lesestation wird das Funktionsprinzip der erfindungsgemäßen Hinzufügung eines Trägerhilfssignals zu dem Empfangssignal beschrieben.

Eine Sendevorrichtung 9 besteht aus den Komponenten Frequenzgenerator 1 und Sendeendstufe 2. Die vom Frequenzgenerator 1 erzeugte Trägerfrequenz wird über die Sendeendstufe 2 verstärkt, wobei das Ausgangssignal der Sendeendstufe 9 über ein Steuersignal 13, welches von einer Steuer- und Auswertevorrichtung 11 gesteuert wird, mit den zu sendenden Daten moduliert werden kann. Von der Sendevorrichtung 9 gelangt das Sendesignal zu einer Signalverteilvorrichtung 4. In der Signalverteilvorrichtung 4 erfolgt eine Aufteilung des Sendesignals, wobei der überwiegende Anteil des Sendesignals an eine Antenne 3 weitergeleitet wird und ein geringer Anteil an eine Empfangsvorrichtung 8 weitergeleitet wird.

Das von der Antenne 3 empfangene Signal passiert die Signalverteilvorrichtung 4 relativ ungehindert und wird als Empfangsignal 14 an die Empfangsvorrichtung 8 weitergeleitet, die aus den Komponenten Demodulator 5 und Empfangsverstärker 6 besteht. Das vom Demodulator 5 demodulierte Signal wird vom Empfangsverstärker 6, der gleichzeitig die Funktion eines Bandpassfilters aufweisen kann, verstärkt und gelangt an die Steuer- und Auswertevorrichtung 11, in der die demodulierten und verstärkten Empfangsdaten weiterverarbeitet werden. Die Bandpassfilterfunktion des Empfangsverstärkers 6 dient zur weiteren Aufbereitung des Empfangssignals, so dass Frequenzen, die oberhalb und unterhalb des Frequenzbereichs des von einem Transponder erwarteten Datensignals liegen, ausgefiltert werden, womit gleichzeitig der Gleichspannungsanteil aus dem Empfangssignal entfällt.

Damit der Demodulator 5 auch dann noch zuverlässig arbeiten kann, wenn das von der Signalverteilvorrichtung 4 zugeführte Empfangssignal 14 keine ausreichende Amplitude der Trägerfrequenz aufweist, wird dem Empfangssignal 14 erfindungsgemäß ein Trägerhilfssignal 16 hinzugefügt, welches, wie in Fig. 1 beispielhaft dargestellt, vom Frequenzgenerator 1 erzeugt, über einen Trägerhilfssignalverstärker 7 verstärkt und über eine Anpassschaltung 10 dem Empfangssignal 14 hinzugefügt wird. Damit steht dem Demodulator 5 jederzeit eine ausreichende Amplitude der Trägerfrequenz zur Verfügung, unabhängig davon, ob das von der Signalverteilvorrichtung 4 zugeführte Empfangssignal 14 eine ausreichende Amplitude der Trägerfrequenz enthält.

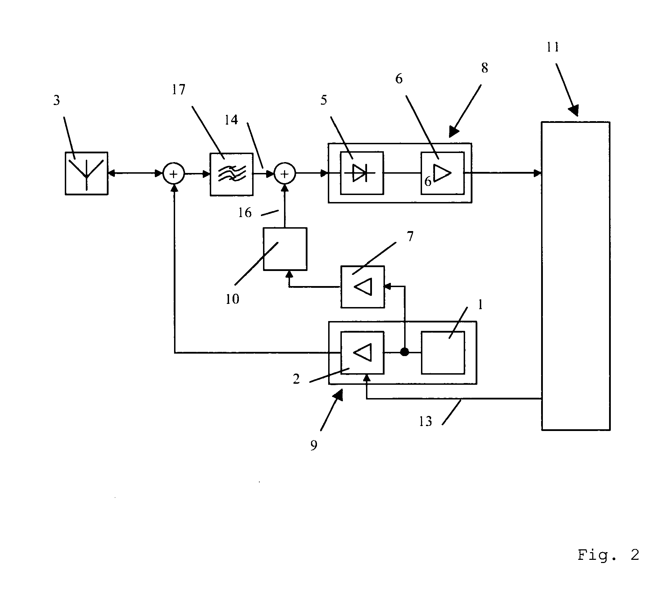

Diese, wie auch alle weiteren Ausführungsformen können unabhängig davon eingesetzt werden, ob zwischen Antenne 3 und Empfangsvorrichtung 8 der Schreib-/Lesestation eine Signalverteilvorrichtung 4, ein Seitenbandfilter 17 (in Fig. 2 dargestellt), Kombinationen aus Signalverteilvorrichtung 4 und Seitenbandfilter 17 oder andere Vorrichtungen angeordnet sind, die eine allgemeine Filtervorrichtung, wie beispielsweise ein Hochpassfilter oder Tiefpassfilter sein kann.

In Fig. 2 ist beispielhaft das Funktionsprinzip der erfindungsgemäßen Schreib-/Lesestation dargestellt, bei der ein Seitenbandfilter 17 zwischen Antenne 4 und Empfangsvorrichtung 8 eingesetzt wird, wodurch die Amplitude der Trägerfrequenz im Empfangssignal 14 nahezu ausgelöscht werden kann. Um zu verhindern, dass das dem Demodulator 5 zugeführte Empfangssignal 14 keine ausreichende Amplitude der Trägerfrequenz enthält, wird dem Empfangssignal 14 hinter dem Seitenbandfilter 17 das Trägerhilfssignal 16 hinzugefügt.

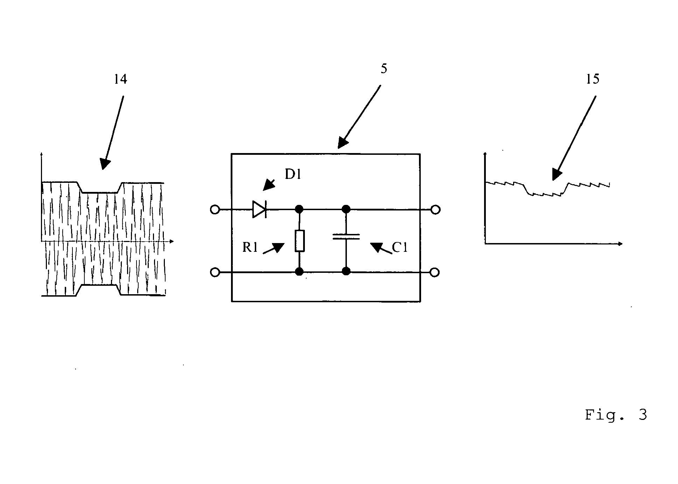

Fig. 3 zeigt ein Ausführungsbeispiel des Demodulators 5 in Form einer möglichen Ausführungsform eines Diodendemodulators, bestehend aus einer Diode D1, einem Widerstand R1 und einem Kondensator C1. Dem Demodulator 5 wird das Empfangssignal 14 zugeführt, bei dem die Empfangsdaten der Trägerfrequenz aufmoduliert sind. Eine Hüllkurve des Empfangssignals 14 zeigt die aufmodulierten Empfangsdaten. In einem Demodulator-Ausgangssignal 15 ist die Trägerfrequenz weitgehend eliminiert, jedoch hängt der Betrag des Gleichspannungsanteils im Demodulator-Ausgangssignal 15 von der Amplitude der Trägerfrequenz im Empfangssignal 14 ab und kann als Indikator für die Amplitude der Trägerfrequenz herangezogen werden.

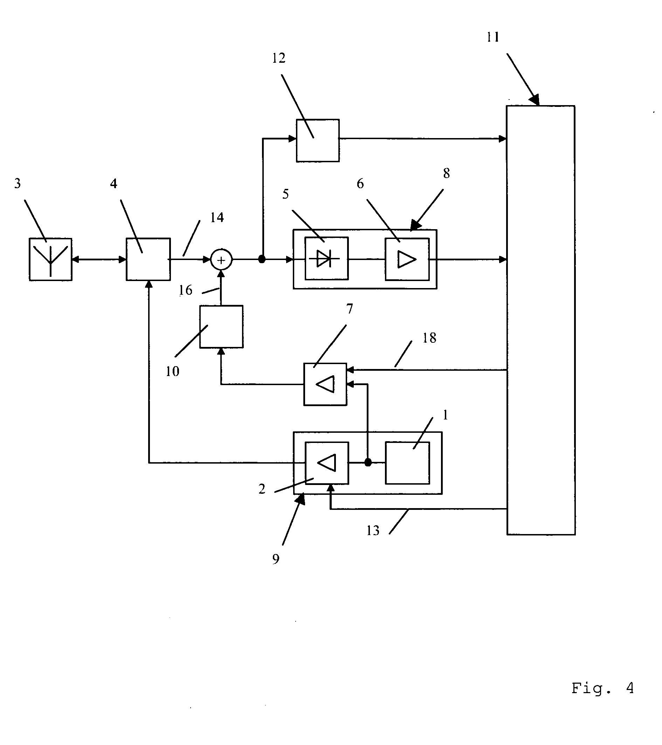

Fig. 4 zeigt eine weitere vorteilhafte Ausführungsform der erfindungsgemäßen Schreib-/Lesestation, bei der ein Trägerhilfssignalverstärker 7 über ein zusätzliches Steuersignal 18 von der Steuer- und Auswertevorrichtung 11 gesteuert werden kann, und bei der eine zusätzliche Messvorrichtung 12 vorgesehen ist. Die Messvorrichtung 12 hat die Aufgabe, der Steuer- und Auswertevorrichtung 11 einen Messwert zur Verfügung zu stellen, aus dem die Amplitude der im Empfangssignal 14 enthaltenen Trägerfrequenz abgeleitet werden kann. In der Steuer- und Auswertevorrichtung 11 wird anhand des Messwertes der Messvorrichtung 12 entschieden, ob dem Empfangssignal 14 das Trägerhilfssignal 16 hinzugefügt werden muss, oder ob das Empfangssignal 12 bereits eine ausreichende Amplitude der Trägerfrequenz aufweist. Nachdem die Messvorrichtung 12 eine unzureichende Amplitude der Trägerfrequenz detektiert hat, aktiviert die Steuer- und Auswertevorrichtung 11 den Trägerhilfssignalverstärker 7, damit das Trägerhilfssignal 16 dem Empfangssignal 14 hinzugefügt wird. Die Hinzufügung des Trägerhilfssignals 16 zum Empfangssignal 14 erfolgt somit nur bedarfsweise.

Das nur bedarfsweise Hinzufügen des Trägerhilfssignals 16 ist von Vorteil, da die ständige Hinzufügung des Trägerhilfssignal 16 zu einer Auslöschung oder starken Reduzierung der Amplitude der Trägerfrequenz führen kann, wenn die Phasenlage der im Empfangssignal 14 enthaltenen Trägerfrequenz in einem Bereich von 180° gegenüber der Phasenlage des Trägerhilfssignals 16 verschoben ist und die Amplituden beider Signale einen ähnlich hohen Wert aufweisen.

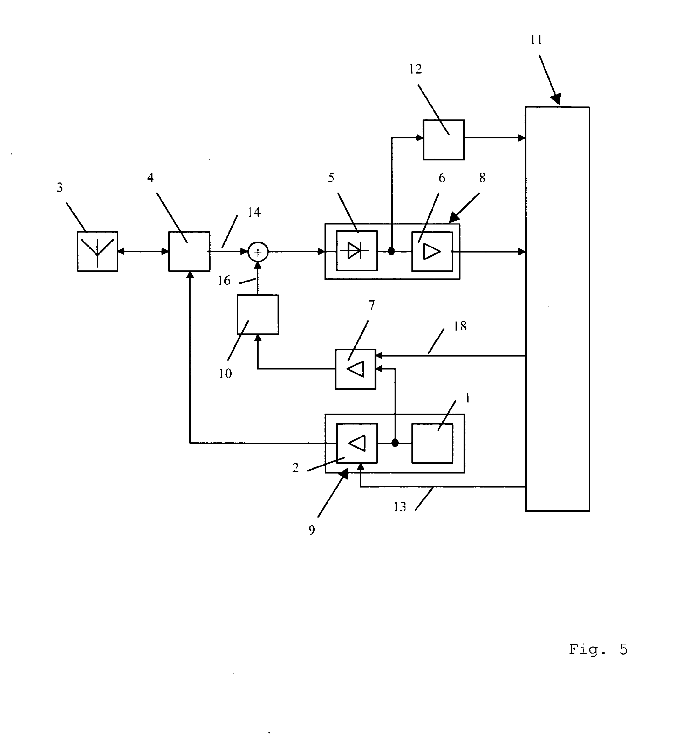

In Fig. 5 wird eine weitere vorteilhafte Ausführungsform der erfindungsgemäßen Schreib-/Lesestation dargestellt, bei der das Trägerhilfssignal 7 ebenfalls nur im Bedarfsfalle dem Empfangssignal 14 hinzugefügt wird. Der Abgriff der Messvorrichtung 12 liegt bei dieser Ausführungsform jedoch hinter dem Demodulator 5 und kann anhand des Gleichspannungsanteils im Demodulator-Ausgangssignal 15 die Amplitude der Trägerfrequenz im Empfangssignal 14 herleiten.

Diese Ausführungsform hat den Vorteil, dass die Messvorrichtung 12 sehr einfach und preiswert aufgebaut werden kann, weil die hochfrequente Trägerfrequenz nicht gesondert aus dem Empfangssignal gefiltert werden muss, sondern lediglich der Betrag des Gleichspannungsteils hinter dem Diodendemodulator weiterverarbeitet werden muss.

### Bezugszahlen

- 1: Frequenzgenerator
- 2: Sendeendstufe
- 3: Antenne
- 4: Signalverteilvorrichtung
- 5: Demodulator
- 6: Empfangsverstärker
- 7: Trägerhilfssignalverstärker
- 8: Empfangsvorrichtung
- 9: Sendevorrichtung
- 10: Anpassschaltung
- 11: Steuer- und Auswertevorrichtung
- 12: Messvorrichtung
- 13: Steuersignal
- 14: Empfangssignal
- 15: Demodulator-Ausgangssignal
- 16: Trägerhilfssignal
- 17: Seitenbandfilter
- 18: Steuersignal
- D1: Diode
- R1: Widerstand
- C1: Kondensator

## Patentansprüche

1. Schreib-/Lesestation eines RFID-Systems zur Kommunikation mit passiven RFID-Transpondern, die
- eine Antenne (3), die gleichzeitig als Sende- und Empfangsantenne ausgebildet ist,
- eine Sendevorrichtung (9),
- eine Empfangsvorrichtung (8), die einen quadratischen Detektor enthält, wobei die Empfangsvorrichtung (8) als eine wenigstens ein Empfangssignal (14) mit einer Trägerfrequenz mit einer Amplitude empfangende Empfangsvorrichtung (8) ausgebildet ist,
- eine zwischen der Antenne (3) und der Empfangsvorrichtung (8) angeordnete Signalverteilvorrichtung (4) und/oder eine Filtervorrichtung (19) und
- eine Steuer- und Auswertevorrichtung (11)
aufweist,
**dadurch gekennzeichnet**, däss die Schreib-/Lesestation als eine dem Empfangssignal (14) wenigstens ein Trägerhilfssignal (16) zur Vermeidung einer Auslöschung oder einer starken Reduzierung einer Amplitude einer Trägerfrequenz hinzufügende Schreib-/Lesestation ausgebildet ist.

2. Schreib-/Lesestation nach Anspruch 1, **dadurch gekennzeichnet, dass** die Schreib-/Lesestation als eine das Trägerhilfssignal (16) dem Empfangssignal (14) lediglich im Bedarfsfalle hinzufügende Schreib-/Lesestation ausgebildet ist.

3. Schreib-/Lesestation nach Anspruch 1 oder 2, **dadurch gekennzeichnet, dass** eine Messvorrichtung (12) zur Bestimmung der Amplitude des im Empfangssignal (16) enthaltenen Trägersignals vorgesehen ist.

4. Schreib-/Lesestation nach Anspruch 3, **dadurch gekennzeichnet, dass** der Messvorrichtung (12) das Empfangssignal (14) direkt zuführbar ist.

5. Schreib-/Lesestation nach Anspruch 3, **dadurch gekennzeichnet, dass** der Messvorrichtung (12) das Empfangssignal (14) nach Hinzufügen des Trägerhilfssignales (16) zuführbar ist.

6. Schreib-/Lesestation nach Anspruch 3, **dadurch gekennzeichnet, dass** der Messvorrichtung (12) das demodulierte Empfangssignal zuführbar ist.

7. Schreib-/Lesestation nach Anspruch 1, **dadurch gekennzeichnet, dass** die Hinzufügung des Trägerhilfssignales (16) durch ein Steuersignal (18) steuerbar ist.

8. Schreib-/Lesestation nach Anspruch 1, **dadurch gekennzeichnet, dass** das Trägerhilfssignal (16) von einem Frequenzgenerator (1), der als ein gleichzeitig das Trägersignal für die Datenübertragung generierender Frequenzgenerator ausgebildet wird, erzeugbar ist.

9. Schreib-/Lesestation nach Anspruch 1, **dadurch gekennzeichnet, dass** die Schreib-/Lesestation einen Phasenschieber aufweist, und dass das Trägerhilfssignal (16) von dem Phasenschieber in seiner Phasenlage verschiebbar ausgebildet ist.

10. Schreib-/Lesestation nach Anspruch 1 oder 2, **dadurch gekennzeichnet, dass** für die Erzeugung des Trägerhilfssignales (16) ein separater Frequenzgenerator vorgesehen ist.

11. Verfahren zur Kommunikation zwischen einer Schreib-/Lesestation und einem Transponder, wobei eine Empfangsvorrichtung (8) der Schreib-/Lesestation ein Empfangssignal (14) des Transponders empfängt,
**dadurch gekennzeichnet, dass** dem Empfangssignal (14) wenigstens ein Trägerhilfssignal (16) hinzugefügt wird.

12. Verfahren nach Anspruch 11, **dadurch gekennzeichnet, dass** das Trägerhilfssignal (16) dem Empfangssignal (14) lediglich im Bedarfsfalle hinzugefügt wird.

13. Verfahren nach Anspruch 11, **dadurch gekennzeichnet, dass** die Hinzufügung des Trägerhilfssignales (16) durch ein Steuersignal (18) steuerbar ist.

14. Verfahren nach Anspruch 11, **dadurch gekennzeichnet, dass** mittels einer Messvorrichtung (12) eine Bestimmung der Amplitude des im Empfangssignal (16) enthaltenen Trägersignals durchgeführt wird.

15. Verfahren nach Anspruch 11, **dadurch gekennzeichnet, dass** das Trägerhilfssignal (16) in seiner Phasenlage verschiebbar ist.

## Claims

1. Read/write station of an RFID system for communication with passive RFID transponders, which has
- an antenna (3), formed both as a transmitting and receiving antenna,
- a transmitting device (9),
- a receiving device (8), including a square-law detector, the receiving device (8) being formed as a receiving device (8) which receives at least a receive signal (14) with a carrier frequency with an amplitude,
- a signal distributing device (4), arranged between the antenna (3) and the receiving device (8), and/or a filter device (19), and
- a control and evaluating device (11),
**characterised in that** the read/write station is formed as a read/write station which adds at least an auxiliary carrier signal (16) to the receive signal (14) to avoid obliteration or severe reduction of an amplitude of a carrier frequency.

2. Read/write station according to Claim 1, **characterised in that** the read/write station is formed as a read/write station which adds the auxiliary carrier signal (16) to the receive signal (14) only in case of need.

3. Read/write station according to Claim 1 or 2, **characterised in that** a measuring device (12) is provided for determining the amplitude of the carrier signal contained in the receive signal (16).

4. Read/write station according to Claim 3, **characterised in that** the receive signal (14) can be fed directly to the measuring device (12).

5. Read/write station according to Claim 3, **characterised in that** the receive signal (14) can be fed to the measuring device (12) after addition of the auxiliary carrier signal (16).

6. Read/write station according to Claim 3, **characterised in that** the demodulated receive signal can be fed to the measuring device (12).

7. Read/write station according to Claim 1, **characterised in that** the addition of the auxiliary carrier signal (16) is controllable by a control signal (18).

8. Read/write station according to Claim 1, **characterised in that** the auxiliary carrier signal (16) can be generated by a frequency generator (1), formed as a frequency generator which simultaneously generates the carrier signal for the data transmission.

9. Read/write station according to Claim 1, **characterised in that** the read/write station has a phase shifter, and **in that** the auxiliary carrier signal (16) is formed so as to be shiftable in its phase position by the phase shifter.

10. Read/write station according to Claim 1 or 2, **characterised in that** a separate frequency generator is provided for generating the auxiliary carrier signal (16).

11. Method for communication between a read/write station and a transponder, in which a receiving device (8) of the read/write station receives a receive signal (14) of the transponder,
**characterised in that** at least an auxiliary carrier signal (16) is added to the receive signal (14).

12. Method according to Claim 11, **characterised in that** the auxiliary carrier signal (16) is added to the receiving signal (14) only in case of need.

13. Method according to Claim 11, **characterised in that** the addition of the auxiliary carrier signal (16) is controllable by a control signal (18).

14. Method according to Claim 11, **characterised in that** a determination of the amplitude of the carrier signal contained in the receive signal (16) is carried out by means of a measuring device (12).

15. Method according to Claim 11, **characterised in that** the auxiliary carrier signal (16) is shiftable in its phase position.

## Revendications

1. Station d'écriture/lecture d'un système RFID pour la communication avec des transpondeurs RFID passifs, ladite station comprenant
- une antenne (3) qui est réalisée simultanément sous la forme d'une antenne d'émission et de réception,
- un dispositif formant émetteur (9),
- un dispositif formant récepteur (8), qui contient un détecteur quadratique, le dispositif formant récepteur (8) étant réalisé sous la forme d'un dispositif formant récepteur (8) recevant au moins un signal de réception (14) avec une fréquence porteuse avec une amplitude,
- un dispositif de répartition des signaux (4), disposé entre l'antenne (3) et le dispositif formant récepteur (8), et/ou un dispositif de filtrage (19), et
- un dispositif de commande et d'analyse (11),
**caractérisée en ce que** la station d'écriture/lecture est réalisée sous la forme d'une station d'écriture/lecture ajoutant au signal de réception (14) au moins un signal auxiliaire porteur (16) pour éviter une suppression ou une forte diminution d'une amplitude d'une fréquence porteuse.

2. Station d'écriture/lecture selon la revendication 1, **caractérisée en ce que** la station d'écriture/lecture est réalisée sous la forme d'une station d'écriture/lecture ajoutant le signal auxiliaire porteur (16) au signal de réception (14) uniquement en cas de besoin.

3. Station d'écriture/lecture selon la revendication 1 ou 2, **caractérisée en ce qu'**est prévu un dispositif de mesure (12) pour déterminer l'amplitude du signal porteur contenu dans le signal de réception (16).

4. Station d'écriture/lecture selon la revendication 3, **caractérisée en ce que** le signal de réception (14) peut être acheminé directement vers le dispositif de mesure (12).

5. Station d'écriture/lecture selon la revendication 3, **caractérisée en ce que** le signal de réception (14) peut être acheminé vers le dispositif de mesure (12) après l'ajout du signal auxiliaire porteur (16).

6. Station d'écriture/lecture selon la revendication 3, **caractérisée en ce que** le signal de réception démodulé peut être acheminé vers le dispositif de mesure (12).

7. Station d'écriture/lecture selon la revendication 1, **caractérisée en ce que** l'ajout du signal auxiliaire porteur (16) peut être commandé par un signal de commande (18).

8. Station d'écriture/lecture selon la revendication 1, **caractérisée en ce que** le signal auxiliaire porteur (16) peut être généré par un générateur de fréquence (1), qui est réalisé sous la forme d'un générateur de fréquence générant également le signal porteur pour la transmission de données.

9. Station d'écriture/lecture selon la revendication 1, **caractérisée en ce que** la station d'écriture/lecture comprend un déphaseur, et **en ce que** le signal auxiliaire porteur (16) est formé par le déphaseur pour pouvoir être déplacé dans sa position de phase.

10. Station d'écriture/lecture selon la revendication 1 ou 2, **caractérisée en ce qu'**est prévu un générateur de fréquence séparé pour générer le signal auxiliaire porteur (16).

11. Procédé pour la communication entre une station d'écriture/lecture et un transpondeur, dans lequel un dispositif formant récepteur (8) de la station d'écriture/lecture recevant un signal de réception (14) du transpondeur,
**caractérisé en ce qu'**au moins un signal auxiliaire porteur (16) est ajouté au signal de réception (14).

12. Procédé selon la revendication 11, **caractérisé en ce que** le signal auxiliaire porteur (16) est ajouté au signal de réception (14) uniquement en cas de besoin.

13. Procédé selon la revendication 11, **caractérisé en ce que** l'ajout du signal auxiliaire porteur (16) peut être commandé par un signal de commande (18).

14. Procédé selon la revendication 11, **caractérisé en ce qu'**une détermination de l'amplitude du signal porteur contenu dans le signal de réception (16) est réalisée au moyen d'un dispositif de mesure (12).

15. Procédé selon la revendication 11, **caractérisé en ce que** le signal auxiliaire porteur (16) peut être déplacé dans sa position de phase.
